# EUROPEAN PATENT APPLICATION

(11) **EP 4 530 125 A1**
(43) Date of publication of application: **02.04.2025**
(21) Application number: 23200225.3
(22) Date of filing: 27.09.2023
(51) Int. Cl.: B60L 58/26, H01M 10/613, H01M 10/625, H01M 10/6552, H01M 10/6557, H01M 10/6568

(54) **A BATTERY PACK AND METHOD OF USE**

(71) Applicant: Newfrey LLC, New Britain, CT 06053 (US)
(72) Inventor: AKBARINIA, Alireza, 35394 Gießen (DE)
(74) Representative: SBD IPAdmin

(57) **Abstract**

A battery pack (100) includes a housing (106), at least one battery cell (108) mounted in the housing, a first cooler (112) in direct or indirect contact with the at least one battery cell, a control valve (114) moveable between a first position and a second position, and a second cooler (116) arranged closer to the housing of the battery pack than the first cooler. The first position of the control valve allows recirculation of coolant through the first cooler along a first coolant flow path, while the second position directs coolant to a second flow path and the second cooler. The second cooler is configured to transmit heat from the battery pack to an external environment. This configuration allows for efficient temperature-based cooling of the battery pack, ensuring optimal performance and longevity of the battery cells.

## Description

### Field

The technology relates to the field of battery packs, specifically to the thermal management and cooling systems for battery packs used in electric vehicles and other high-capacity energy storage applications. Proper thermal management is crucial for maintaining the performance, safety, and longevity of battery cells, particularly in high-power and high-energy applications.

### Background

Battery packs, particularly those used in electric vehicles and other high-capacity applications, require efficient thermal management systems to maintain optimal performance and longevity. The temperature of the battery cells must be maintained within a specific range to ensure efficient energy usage and prevent damage to the cells. In particular, the battery pack needs to operate at a minimum working temperature. If the temperature of the cells is less than the minimum working temperature, the cell must be heated up, which can consume battery capacity and reduce the overall energy available for the intended purpose.

Various cooling systems have been developed to manage the temperature of battery packs. For example, US2021210809 discloses a battery coolant reservoir assembly that includes a flexible coolant retaining pouch coupled to a manifold and a battery module disposed within the coolant retaining pouch. KR20210104452A discloses a cooling device for a high voltage battery having a first battery cooler mounted under a first high voltage battery and a second battery cooler disposed at a location spaced apart from the first battery cooler. A fluid control unit connected to the first battery cooler and the second battery cooler allows more cooling fluid into the first battery cooler than the second battery cooler.

However, the battery packs as described in these prior art arrangements still require the battery to use energy from the battery itself to heat up the battery. Additionally, these solutions may not provide adequate insulation to prevent heat loss to the surrounding environment, particularly in cold conditions. This can result in compromised performance and reduced battery capacity.

### Summary

According to a first aspect of the disclosure there is provided a battery pack comprising: a housing; at least one battery cell mounted in the housing; a first cooler in direct or indirect contact with the at least one battery cell; a control valve moveable between a first position and a second position, wherein the first position allows recirculation of coolant through the first cooler along a first coolant flow path and the second position directs coolant to a second flow path and a second cooler; and the second cooler arranged closer to the housing of the battery pack than the first cooler or the second cooler is integrated within the housing. This configuration allows for efficient cooling of the battery pack while minimising heat transfer to the external environment when not needed.

Optionally in some examples, the battery pack further includes a battery pack controller connected to the control valve and configured to control the position of the control valve based on temperature information. This allows for precise control of the cooling system based on the temperature inside the battery pack.

Optionally in some examples, the battery pack further includes a temperature sensor connected to the battery pack controller and configured to measure the temperature inside the battery pack. This enables the battery pack controller to make informed decisions about the cooling strategy based on real-time temperature data.

Optionally in some examples, the battery pack controller is configured to set the control valve to the first position when the temperature inside the battery pack is below a minimum working temperature. This helps to maintain the battery pack at an optimal temperature for efficient operation.

Optionally in some examples, the battery pack controller is configured to set the control valve to the second position when the temperature inside the battery pack is above the minimum working temperature. This allows for efficient heat transfer from the battery pack to the external environment when needed.

Optionally in some examples, the battery pack further includes an insulation layer separating the first cooler and the second cooler. The insulation layer may be realized by an air gap. This helps to limit heat transfer between the two coolers, ensuring that each cooler operates efficiently.

Optionally in some examples, the first cooler includes a channel allowing the coolant to flow through the first cooler in direct or indirect contact with the at least one battery cell. This design ensures efficient cooling of the battery cells.

Optionally in some examples, the battery pack further includes a pump configured to circulate the coolant through the first coolant flow path and the second coolant flow path. This ensures proper circulation of the coolant throughout the cooling system.

Optionally in some examples, the second cooler is configured to transmit heat from the battery pack to an external environment. This allows for efficient heat transfer when needed, helping to maintain the battery pack at an optimal temperature. In an embodiment, the second cooler may be a passive cooler. The second cooler is isolated from the inside area of the battery through an insulation layer. The insulation layer may be an air gap.

Optionally in some examples, the battery pack further includes at least one cooling component in fluid communication with the second cooler on a second coolant flow path. This provides additional cooling capacity for the battery pack when needed. This increases the heat transfer to the environment, and therefore decreases the compressor power needed for releasing heat from the coolant. Thus, the power efficiency is enhanced.

Optionally in some examples, the at least one cooling component is one or more of a radiator, a fan, a heat exchanger, a pump bypass, and an expansion tank. This provides a variety of cooling options for the battery pack, ensuring efficient cooling under various conditions.

Optionally in some examples, the battery pack further includes a check valve moveable between a first position and a second position in fluid communication with the second cooler on the second coolant flow path. This provides additional control over the flow of coolant through the cooling system.

Optionally in some examples, the housing includes a housing top and a housing bottom, and the second cooler is mounted adjacent to the housing bottom.

Optionally in some examples, the minimum working temperature is 20°C.

Optionally in some examples, the control valve is configured to move between the first and second positions based on an external air temperature. This allows the cooling system to adapt to changing environmental conditions.

Optionally in some examples, the first coolant flow path recirculates the coolant through the first cooler without flowing through any other cooling components. This helps to limit heat transfer away from the battery pack when not needed.

According to a second aspect of the disclosure, a vehicle is provided that includes a battery pack as described above. This allows the vehicle to benefit from the efficient cooling system of the battery pack.

According to a third aspect of the disclosure, a method of temperature-based cooling for a battery pack is provided. The method includes monitoring the temperature inside the battery pack, setting the control valve to the first position and recirculating coolant along the first coolant flow path if the temperature is below a minimum working temperature, and setting the control valve to the second position and directing coolant to the second flow path and the second cooler if the temperature is above the minimum working temperature. This method ensures efficient cooling of the battery pack while minimising heat transfer to the external environment when not needed.

### Brief Description of the Drawings

Examples are described in more detail below with reference to the appended drawings.
Figure 1 is a schematic arrangement of a battery pack with a coolant system according to an example;
Figure 2 is a schematic arrangement of a battery pack and coolant system in a device according to an example; and
Figure 3 is a method of use of the battery pack according to an example.

### Detailed Description

The detailed description set forth below provides information and examples of the disclosed technology with sufficient detail to enable those skilled in the art to practise the disclosure.

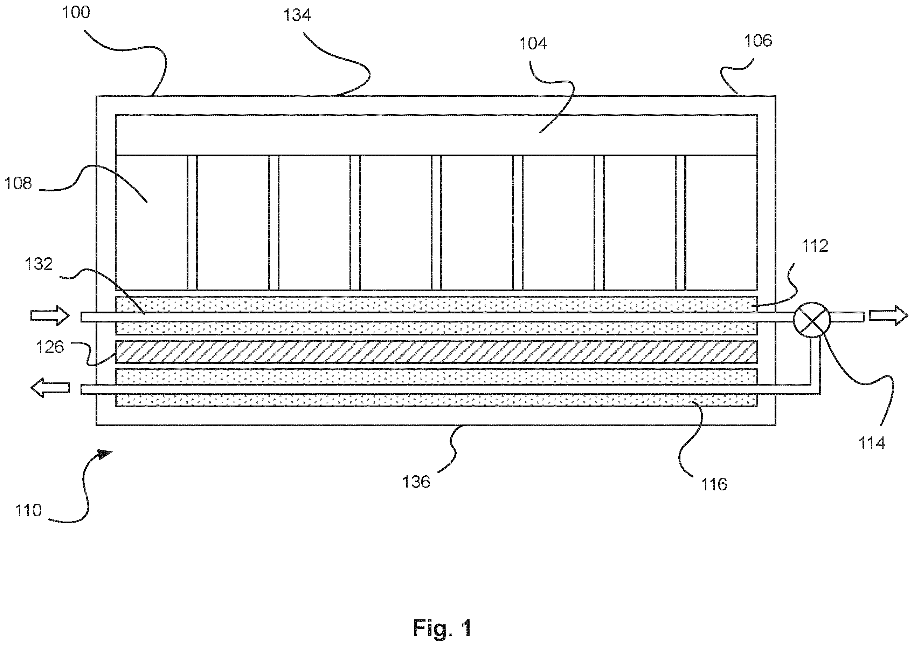

Figure 1 shows a schematic arrangement of a battery pack 100 with a coolant system according to an example. The battery pack 100 comprises a housing 106 and at least one battery cell 108 mounted in the housing 106. A first cooler 112 is in direct or indirect contact with the at least one battery cell 108. For the purposes of clarity, only one battery cell 108 has been labelled in Figure 1. Any number of battery cells 108 can be used in the battery pack 100 as shown in Figure 1.

In the present context, the terms "battery cell", "battery module", "battery section", and "battery pack" (as well as their shortened variants "cell", "module", "section", and "pack") are used to describe different levels of components of an overall battery assembly. For example, numerous individual battery cells form the building blocks of battery modules. Multiple battery modules (in conjunction with ancillary equipment) in turn may make up the battery pack 100 as shown in Figure 1.

For purposes of describing the examples hereinafter, the battery cell 108 is the smallest unit of the battery pack 100 that includes a single anode electrical connection and single cathode electrical connection on the exterior or a sealed housing that contains one or more pairs of anode and cathode elements. A battery cell 108 is a single electrochemical unit, whereas a battery is made up of one or more electrically interconnected cells joined in series, parallel or both, depending on desired output voltage, current or capacity.

A battery apparatus may include one or more battery packs 100 suitably sized to provide electrical power to the vehicle. Battery packs 100 are made up of battery sections which may be made up of numerous battery modules each of which is in turn made up of one or more battery cells 108 that deliver electrical current to a load. The battery cells are electrically interconnected.

Battery packs 100 are made up of sections which may be made up of numerous battery modules each of which is in turn made up of one or more battery cells 108 that deliver electrical current to a load. The number of battery cells 108 within the larger battery module, section, pack or related structure will be appreciated by those skilled in the art to coincide with the power needs of the device receiving electric current from the battery, as well as the thermal operating requirements of the battery cells 108 within the battery. In such batteries, current flow, both charge and discharge, generates heat inside the cells and in their interconnection systems.

Figure 1 also shows a control valve 114 which is moveable between a first position and a second position. In the first position, the control valve 114 allows recirculation of coolant through the first cooler 112 along a first coolant flow path 128. In the second position, the control valve 114 directs coolant to a second flow path 130 and a second cooler 116. The second cooler 116 is arranged closer to the housing 106 of the battery pack 100 than the first cooler 112. In another embodiment, the second cooler is integrated within the housing 106.

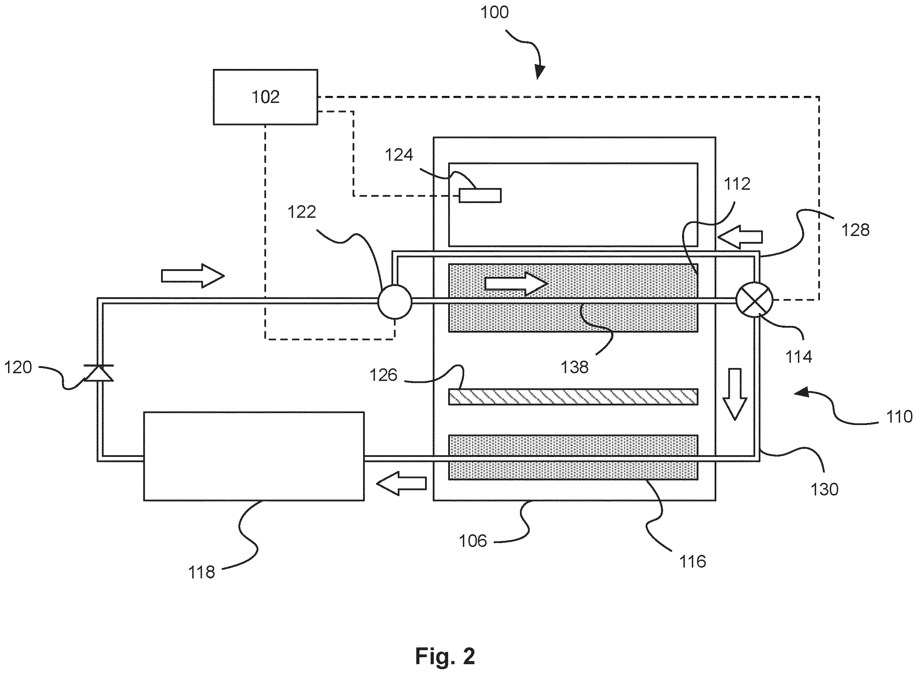

Figure 2 shows a schematic arrangement of a battery pack 100 and coolant system 110 in a device e.g., an electric vehicle (not shown) according to an example. Whilst the battery pack 100 can be used in an electric vehicle, the battery pack 100 can be used in other applications e.g., portable electronic devices, and fixed energy storage systems.

The battery pack 100 includes a battery pack controller 102 connected to the control valve 114 and configured to control the position of the control valve 114 based on temperature information. A temperature sensor 124 is connected to the battery pack controller 102 and configured to measure the temperature inside the battery pack 100. The battery pack 100 also includes an insulation layer 126 separating the first cooler 112 and the second cooler 116, a pump 122 configured to circulate the coolant through the first coolant flow path 128 and the second coolant flow path 130, and at least one cooling component 118 in fluid communication with the second cooler 116 on the second coolant flow path 130. The insulation layer may be an air gap.

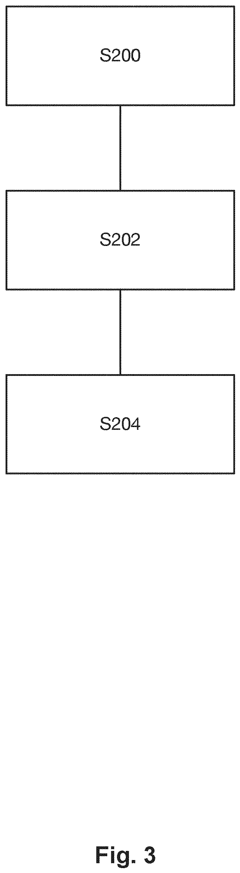

Figure 3 shows a method of use of the battery pack 100 according to an example. The method includes the step S200 of monitoring the temperature inside the battery pack 100. The measure temperature inside the battery pack (or battery subassembly) can be compared to a pre-determined temperature of cells (normally 20degrees Celsius to 40 degrees Celsius) and the environment temperature. The method further includes the step S202 of setting the control valve 114 to the first position and recirculating coolant along the first coolant flow path 128 if the temperature is below a minimum working temperature, and the step S204 of setting the control valve 114 to the second position and directing coolant to the second flow path 130 and the second cooler 116 if the temperature is above the minimum working temperature. In the first position of the control valve 114, the second cooler 116 acts as an additional insulation layer. This additional insulation layer increases heat resistance to environment.

In one example, the battery pack housing 106 and components include a housing structure and material. The housing 106 comprises a housing top 134 and a housing bottom 136 as illustrated in Figure 1. As shown one or more battery cells 108 or modules arrangement, are mounted within the housing 106.

In some examples, the structure of the housing 106 of the battery pack 100 is designed to provide protection and support for the battery cells 108 and other components within the battery pack 100. The housing 106 may be made of a material that is lightweight, durable, and capable of withstanding various environmental conditions, such as temperature fluctuations, moisture, and vibrations. The material may comprise metals, plastics, composites, or a combination thereof. The housing 106 may also include thermal insulation properties to help maintain the temperature of the battery cells 108 within an optimal range.

In one example, the housing 106 comprises a housing top 134 and a housing bottom 136. The housing top 134 and housing bottom 136 may be configured to securely enclose the battery cells 108 or modules and other components within the battery pack 100. The housing top 134 and housing bottom 136 may be attached to each other using various fastening methods, such as screws, bolts, clips, or adhesive bonding. The housing top 134 and housing bottom 136 may also include sealing elements, such as gaskets or O-rings, to prevent the ingress of moisture, dust, or other contaminants into the battery pack 100.

In some examples, the battery cells 108 are arranged within the housing 106 in a manner that optimises the available space and ensures efficient cooling and heat dissipation. The battery cells 108 may be arranged in rows, columns, or other configurations, depending on the shape and size of the housing 106 and the battery cells 108. The arrangement of the battery cells 108 may also take into consideration the electrical connections between the battery cells 108 and the high voltage components 104, as well as the coolant flow paths for the first cooler 112 and the second cooler 116.

In one example, the battery cells 108 are mounted in the housing 106 using various mounting techniques, such as brackets, clamps, or adhesive bonding. The mounting and positioning of the battery cells 108 may be designed to ensure proper contact between the battery cells 108 and the first cooler 112, either directly or indirectly. This contact allows for efficient heat transfer between the battery cells 108 and the first cooler 112, which is for maintaining the temperature of the battery cells 108 within an optimal range.

The mounting and positioning of the battery cells 108 may also take into account the need for electrical connections between the battery cells 108 and the high voltage components 104, as well as the coolant flow paths for the first cooler 112 and the second cooler 116. Proper mounting and positioning of the battery cells 108 can help ensure that the battery pack 100 operates efficiently and safely, with minimal risk of overheating or other temperature-related issues.

In some examples, the first cooler 112 is in direct contact with the battery cells 108, allowing for efficient heat transfer between the battery cells 108 and the first cooler 112. This direct contact can help maintain the temperature of the battery cells 108 within an optimal range, ensuring optimal performance and longevity of the battery pack 100.

In other examples, the first cooler 112 is in indirect contact with the battery cells 108. This indirect contact may be achieved through the use of a thermally conductive material or structure (not shown) that facilitates heat transfer between the battery cells 108 and the first cooler 112. This indirect contact can still provide efficient cooling while potentially reducing the risk of damage to the battery cells 108 due to direct contact with the first cooler 112.

In some examples, the first cooler 112 comprises a channel 132 that allows the coolant to flow through the first cooler 112 in direct or indirect contact with the battery cells 108. The channel 132 may be designed to maximise the surface area of contact between the coolant and the battery cells 108, thereby enhancing the heat transfer efficiency. For example, the channel 132 may take a serpentine or labyrinthine path through the first cooler 112. The channel 132 may also be designed to facilitate even distribution of the coolant across the battery cells 108, ensuring uniform cooling throughout the battery pack 100.

In one example, the first cooler 112 is connected to a first coolant flow path 128 (best shown in Figure 2) that allows for the recirculation of coolant through the first cooler 112. This recirculation can help maintain the temperature of the battery cells 108 within an optimal range by limiting the amount of heat transferred away from the battery pack 100 when the control valve 114 is in the first position. Furthermore, the recirculation of coolant through the first cooler 112 can allow the battery pack 100 to be moved evenly heated by the battery pack 100 itself. This may mean that less energy is used to heat up the battery pack 100 because the heating of the battery pack 100 to a minimum working temperature is more reliable and there are less hot spots within the battery pack 100. Furthermore, the temperature sensor 124 may more reliably detect the current working temperature of the battery pack 100.

The first coolant flow path 128 may be designed to bypass other cooling components 118 of the vehicle, such as a radiator, fan, heat exchanger, pump bypass, or expansion tank. This bypassing can help minimise the heat transfer from the battery pack 100 to the external environment when the control valve 114 is in the first position, ensuring that the battery cells 108 are maintained at a temperature above the minimum working temperature or heated to the minimum working temperature more quickly by the battery pack 100 itself.

In some examples, the first coolant flow path 128 may comprise additional components or features that enhance the cooling efficiency of the first cooler 112. For example, the first coolant flow path 128 may include a pump 122 configured to circulate the coolant through the first cooler 112 and the first coolant flow path 128. The pump 122 may be designed to provide optimal flow rates and pressures for efficient cooling of the battery cells 108.

The first cooler 112 and its associated cooling mechanism provide several advantages for the battery pack 100. By maintaining the temperature of the battery cells 108 within an optimal range, the first cooler 112 can help ensure optimal performance and longevity of the battery pack 100. Additionally, the ability to recirculate coolant through the first cooler 112 and bypass other cooling components 118 when the control valve 114 is in the first position can help minimise heat transfer from the battery pack 100 to the external environment, ensuring that the battery cells 108 are maintained at a temperature above the minimum working temperature.

The control valve 114 together with the battery pack controller 102 is configured to control the temperature-based cooling system 110 of the battery pack 100. In some examples, the control valve 114 is designed to be moveable between a first position and a second position which will now be discussed in more detail below.

In one or some examples, when the control valve 114 is set to the first position, the control valve 114 allows the recirculation of coolant through the first cooler 112 along the first coolant flow path 128. This configuration is particularly advantageous when the temperature inside the battery pack 100 is below a minimum working temperature. This is because the recirculation of the coolant through the first cooler 112 helps to maintain or more quickly raise the temperature of the battery cells 108 within an optimal range for efficient operation. By recirculating the coolant through the first cooler 112, the system can prevent excessive heat transfer from the battery pack 100 to the external environment, thereby preserving the thermal energy within the battery pack 100 and ensuring optimal performance. Notably, FEM simulations of the system have shown that the system can increase the efficiency by up to 25%.

In one or some examples, when the control valve 114 is set to the second position, the control valve 114 directs the coolant to the second flow path 130 and the second cooler 116 once the coolant exits the first cooler 112. This configuration is advantageous when the temperature inside the battery pack 100 is above the minimum working temperature, as it allows for heat transfer from the battery pack 100 to the external environment, thereby preventing overheating and potential damage to the battery cells 108. The cooling capacity is also increased by up to 50%, and thus the power needed for cooling is decreased compared to existing system. By directing the coolant to the second cooler 116 and other cooling components 118, the system can efficiently dissipate excess heat and maintain the temperature of the battery pack 100 within a safe and optimal range. This increases the cooling efficiency.

In some examples, the control valve 114 is connected to the second cooler flow path 130, which is designed to direct the coolant through the second cooler 116 and other cooling components 118, such as a radiator, a fan, a heat exchanger, a pump bypass, and an expansion tank. In this way the second cooler 116 is in fluid communication with the other cooling components 118 of the vehicle.

The radiator can help to dissipate heat from the coolant as it flows through the second coolant flow path 130, while the fan can assist in circulating air around the radiator to further enhance heat dissipation. The heat exchanger can transfer heat from the coolant to another fluid, such as air or another coolant, to improve the overall cooling efficiency. The pump bypass can help to regulate the flow of coolant through the cooling system, while the expansion tank can accommodate changes in coolant volume due to temperature fluctuations. The other cooling components 118 can work together with the second cooler 116 to maintain the battery pack 100 within an optimal temperature range during operation, ensuring efficient performance and prolonging the life of the battery cells 108.

This configuration allows for a more comprehensive cooling strategy, as it enables the system to effectively transfer heat from the battery pack 100 to the external environment when necessary. The second coolant flow path 130 may comprise various channels, conduits, or other structures that facilitate the flow of coolant through the second cooler 116 and other cooling components 118 before returning to the pump 122 for recirculation.

The control valve 114 may be designed with various mechanisms, such as a rotary valve, a linear valve, or a combination thereof, to enable smooth and precise movement between the first and second positions. In some examples, the control valve 114 may comprise additional intermediate positions to allow for more granular control over the coolant flow and heat transfer, depending on the specific temperature requirements of the battery pack 100. Furthermore, the control valve 114 may be constructed from materials that are resistant to corrosion, wear, and thermal expansion, ensuring long-lasting and reliable operation in various temperature conditions.

In one example, the second cooler 116 is a component of the cooling system 110 of the battery pack 100, designed to efficiently transfer heat from the battery pack 100 to the external environment. The second cooler 116 is arranged closer to the housing 106 of the battery pack 100 than the first cooler 112, which allows for more effective heat transfer and improved cooling performance.

In some examples, the second cooler 116 is strategically positioned and arranged within the battery pack 100 to optimise its heat transfer capabilities. The second cooler 116 may be mounted adjacent to the housing bottom 136 or other suitable locations within the battery pack 100 to facilitate efficient heat transfer from the battery cells 108 to the external environment. The proximity of the second cooler 116 to the housing 106 allows for more effective heat dissipation, which can help maintain the battery pack 100 within an optimal temperature range during operation.

In some examples, the second cooler 116 is arranged closer to the housing 106 of the battery pack 100 than the first cooler 112. This arrangement allows the second cooler 116 to be more effective in transferring heat from the battery pack 100 to the external environment.

Additionally, the positioning of the second cooler 116 relative to the first cooler 112 can help to ensure that the cooling system 110 operates efficiently, with the first cooler 112 providing a dual functionality in dependence of the position of the control valve 114. For example, the first cooler 112 helps maintain the battery cells 108 at a desired temperature with the control valve 114 is in the first position or together with the second cooler 116 helps dissipate excess heat to the external environment.

In one example, the battery pack 100 comprises a battery pack controller 102 and a temperature sensor 124. The battery pack controller 102 is connected to the control valve 114 and is configured to control the position of the control valve 114 based on temperature information received from the temperature sensor 124. The temperature sensor 124 is connected to the battery pack controller 102 and is configured to measure the temperature inside the battery pack 100.

In some examples, the battery pack controller 102 and the temperature sensor 124 are connected via wired or wireless communication means. The temperature sensor 124 continuously or periodically measures the temperature inside the battery pack 100 and sends the temperature information to the battery pack controller 102. The battery pack controller 102 processes the received temperature information and determines the appropriate position for the control valve 114 based on the current temperature inside the battery pack 100.

The use of a battery pack controller 102 and a temperature sensor 124 allows for precise and efficient control of the cooling system 110, ensuring that the battery pack 100 operates within an optimal temperature range. This can help to prolong the life of the battery cells 108 and improve the overall performance of the battery pack 100.

In some examples, the battery pack controller 102 is configured to set the control valve 114 to the first position when the temperature inside the battery pack 100 is below a minimum working temperature. In this position, the control valve 114 allows recirculation of coolant through the first cooler 112 along the first coolant flow path 128. This helps to maintain the temperature of the battery cells 108 within the desired range, preventing the battery pack 100 from becoming too cold and potentially damaging the battery cells 108.

In other examples, the battery pack controller 102 is configured to set the control valve 114 to the second position when the temperature inside the battery pack 100 is above the minimum working temperature. In this position, the control valve 114 directs coolant to the second flow path 130 and the second cooler 116. This allows for heat transfer from the battery pack 100 to the external environment, helping to prevent the battery cells 108 from overheating and potentially causing damage or reduced performance.

In some examples, the minimum working temperature is a predetermined value, such as 20°C. The battery pack controller 102 may be configured to compare the temperature information received from the temperature sensor 124 to this predetermined value to determine the appropriate position for the control valve 114.

In other examples, the minimum working temperature may be determined based on various factors, such as the type of battery cells 108 or modules used in the battery pack 100, the specific application or use case of the battery pack 100, or the external environmental conditions. The battery pack controller 102 may be configured to receive information about these factors and adjust the minimum working temperature accordingly.

In other examples, the battery pack controller 102 may be configured to move the control valve 114 between the first and second positions based on other parameters, such as the external air temperature or the load on the battery pack 100. This can help to further optimise the cooling system 110 and improve the overall performance of the battery pack 100. In some examples, the battery pack controller 102 is connected to another temperature sensor (not shown) which is configured to detect the external air temperature. In this case, the battery pack controller 102 is configured to move the control valve 114 between the first and second positions based on the internal temperature of the battery pack 100 and the external air temperature.

The battery pack 100 may comprise additional optional features, such as a check valve 120 to prevent reverse flow of coolant through the cooling system 110.

In some examples, the battery pack 100 includes an insulation layer 126 that separates the first cooler 112 and the second cooler 116. The insulation layer 126 is designed to limit heat transfer between the first cooler 112 and the second cooler 116, ensuring that the cooling mechanisms of the two coolers operate independently and efficiently.

In one example, the insulation layer 126 may be made of a thermally insulating material that effectively prevents heat transfer between the first cooler 112 and the second cooler 116. The material may be selected based on its thermal conductivity, durability, and compatibility with the other components of the battery pack 100. Examples of suitable materials for the insulation layer 126 include, but are not limited to, plastics, ceramics, or composite materials with low thermal conductivity. In some examples, the insulation layer 126 is additionally or alternatively an air gap between the first cooler 112 and the second cooler 116.

The structure of the insulation layer 126 may be designed to provide an effective barrier between the first cooler 112 and the second cooler 116. In some examples, the insulation layer 126 may comprise a continuous sheet or layer of insulating material that extends across the entire interface between the first cooler 112 and the second cooler 116. In other examples, the insulation layer 126 may comprise a series of discrete insulating elements or segments that are arranged to cover the interface between the first cooler 112 and the second cooler 116.

The insulation layer 126 provides several advantages in terms of the performance and efficiency of the battery pack 100. By limiting heat transfer between the first cooler 112 and the second cooler 116, the insulation layer 126 ensures that the cooling mechanisms of the two coolers can operate independently, without interference from one another. This allows the battery pack controller 102 to more accurately control the temperature of the battery cells 108 by adjusting the position of the control valve 114 based on the temperature information received from the temperature sensor 124.

As mentioned above, the battery pack 100 comprises a pump 122 configured to circulate the coolant through the first coolant flow path 128 and the second coolant flow path 130. The pump 122 maintains a consistent flow of coolant through the cooling system 110, ensuring that the battery cells 108 are adequately cooled during operation.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealised or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery pack (100) comprising:
a housing (106);
at least one battery cell (108) mounted in the housing (106);
a first cooler (112) in direct or indirect contact with the at least one battery cell (108);
a control valve (114) moveable between a first position and a second position, wherein the first position allows recirculation of coolant through the first cooler (112) along a first coolant flow path (128) and the second position directs coolant to a second flow path (130) and a second cooler (116); and
the second cooler (116) arranged closer to the housing (106) of the battery pack (100) than the first cooler (112) or is integrated within the housing (106).

2. The battery pack (100) according to claim 1, further comprising a battery pack controller (102) connected to the control valve (114) and configured to control the position of the control valve (114) based on temperature information.

3. The battery pack (100) according to claim 2, further comprising a temperature sensor (124) connected to the battery pack controller (102) and configured to measure the temperature inside the battery pack (100).

4. The battery pack (100) according to any one of claims 2 to 3, wherein the battery pack controller (102) is configured to set the control valve (114) to the first position when the temperature inside the battery pack (100) is below a minimum working temperature.

5. The battery pack (100) according to any one of claims 2 to 3, wherein the battery pack controller (102) is configured to set the control valve (114) to the second position when the temperature inside the battery pack (100) is above the minimum working temperature.

6. The battery pack (100) according to any one of the preceding claims, further comprising an insulation layer (126) separating the first cooler (112) and the second cooler (116).

7. The battery pack (100) according to any one of the preceding claims, wherein the first cooler (112) comprises a channel (132) allowing the coolant to flow through the first cooler (112) in direct or indirect contact with the at least one battery cell (108).

8. The battery pack (100) according to any one of the preceding claims, further comprising a pump (122) configured to circulate the coolant through the first coolant flow path (128) and the second coolant flow path (130).

9. The battery pack (100) according to any one of the preceding claims, wherein the second cooler (116) is configured to transmit heat from the battery pack (100) to an external environment.

10. The battery pack (100) according to any one of the preceding claims, further comprising at least one cooling component (118) in fluid communication with the second cooler (116) on the second coolant flow path (130).

11. The battery pack (100) according to claim 10, wherein the at least one cooling component (118) is one or more of a radiator, a fan, a heat exchanger, a pump bypass, and an expansion tank.

12. The battery pack (100) according to any one of the preceding claims, further comprising a check valve (120) moveable between a first position and a second position in fluid communication with the second cooler (116) on the second coolant flow path (130).

13. The battery pack (100) according to any one of the preceding claims, wherein the housing (106) comprises a housing top (134) and a housing bottom (136) and the second cooler (116) is mounted adjacent to the housing bottom (136).

14. The battery pack (100) according to claims 4 or 5 wherein the minimum working temperature is 20°C.

15. The battery pack (100) according to any one of the preceding claims, wherein the control valve (114) is configured to move between the first and second positions based on an external air temperature.

16. The battery pack (100) according to any one of the preceding claims, wherein the first coolant flow path (128) recirculates the coolant through the first cooler (112) without flowing through any other cooling components (118).

17. A vehicle comprising a battery pack (100) according to any one of claims 1 to 16.

18. A method of temperature-based cooling for a battery pack (100) according to any one of claims 1 to 16, comprising the steps of:
monitoring the temperature inside the battery pack (100);
setting the control valve (114) to the first position and recirculating coolant along the first coolant flow path (128) if the temperature is below a minimum working temperature; and
setting the control valve (114) to the second position and directing coolant to the second flow path (130) and the second cooler (116) if the temperature is above the minimum working temperature.
